Europäisches Patentamt

European Patent Office

Office européen des brevets

(19)

(11) Veröffentlichungsnummer : **0 353 682 B1**

(12) # EUROPÄISCHE PATENTSCHRIFT

(45) Veröffentlichungstag der Patentschrift :
**13.05.92 Patentblatt 92/20**

(51) Int. Cl.$^5$: **B60N 3/08**

(21) Anmeldenummer : **89114080.8**

(22) Anmeldetag : **31.07.89**

(54) **Behälter, insbesondere Ascher für Fahrzeuge.**

(30) Priorität : **02.08.88 DE 3826180**

(43) Veröffentlichungstag der Anmeldung :
**07.02.90 Patentblatt 90/06**

(45) Bekanntmachung des Hinweises auf die
Patenterteilung :
**13.05.92 Patentblatt 92/20**

(84) Benannte Vertragsstaaten :
**DE ES FR GB IT SE**

(56) Entgegenhaltungen :
**DE-B- 1 113 108**
**DE-C- 2 731 984**
**DE-C- 3 409 732**
**US-A- 3 601 464**

(73) Patentinhaber : **Gebr. Happich GmbH**
**Postfach 10 02 49 Clausenbrücke 1**
**W-5600 Wuppertal 1 (DE)**

(72) Erfinder : **Cziptschirsch, Kurt**
**Auf der Kante 10**
**W-5600 Wuppertal 12 (DE)**
Erfinder : **Dabringhaus, Volker**
**Paul-Löbe-Strasse 55**
**W-5600 Wuppertal 1 (DE)**
Erfinder : **Wegel, Peter**
**Posener Strasse 26**
**W-5600 Wuppertal 2 (DE)**

**Beschreibung**

Die Erfindung bezieht sich auf einen Behälter, insbesondere Ascher für Fahrzeuge, bestehend aus einem Gehäuse und einem schubladenartigen Einsatz, der über Führungsorgane gleitbeweglich in dem Gehäuse geführt ist, wobei die Führungsorgane an den Seitenwänden des Gehäuses befestigt und jeweils als längliche, in sich federnde Platten mit an den freien Längsenden angeordneten, nach außen gerichteten Führungsvorsprüngen ausgebildet sind, die mit entsprechenden Führungsnuten am Einsatz mit Vorspannung zusammenwirken, wobei die Führungsvorsprünge einstückig und materialeinheitlich mit der jeweils zugehörigen Platte verbunden sind.

Behälters, bestehend aus einem Gehäuse und einem schubladenförmigen Einsatz, sind, zumindest als Ascher für Fahrzeuge, in verschiedenen Ausführungsformen bekannt. So ist es z.B. bekannt (vgl. DE-A-2 157 661) zwischen Einsatz und Gehäuse Blattfedern anzuordnen, die den nötigen Spielausgleich zwischen Einsatz und Gehäuse besorgen sollen. Es ist ferner bekannt (vgl. z.B. DE-U-1 812 879, DE-U-1 832 239 und DE-U-1 977 221), aus den Seitenwänden der Gehäuse federnde Laschen freizuschneiden und in die Laschen Führungsvorsprünge einzuprägen, die in Führungsrillen des Einsatzes eingreifen. Ascher mit im Einsatz vorgesehenen Führungsrillen und am Gehäuse befestigten Rollen, die in den Führungsrillen gleiten, sind ebenfalls bekannt (vgl. z.B. DE-B-1 143 726, DE-U-1 814 636, DE-U-1 742 307, DE-U-1 737 300, DE-U-1 696 308). Auch ist es bekannt, am Gehäuse Gleitstücke zu befestigen, die in Führungsrillen des Einsatzes gleiten (vgl. z.B. DE-U-1 794 589, DE-U-1 759 721, DE-U-1 765 298, DE-B-1 113 108, DE-B-1 225 433) Schließlich ist es bekannt, am Einsatz oder Gehäuse Aufnahmen für die Steckmontage von Führungsorganen vorzusehen, die mit am Gehäuse oder Einsatz vorgesehene Führungsrillen zusammenwirken (vgl. DE-A-2 731 984, DE-A- 3 409 732).

Bei Behältern der in Rede stehenden Art besteht generell die Schwierigkeit, die Abmessungen von Gehäuse und Einsatz so aufeinander abzustimmen, daß der Einsatz zwar leicht, aber trotzdem spiel frei im Gehäuse zu gleiten vermag, so daß Klappergeräusche, hervorgerufen durch Erschütterungen, die bei einem Ascher für Fahrzeuge beim Fahrbetrieb auftreten, unterbleiben.

Es hat sich gezeigt, daß die vorbekannten Lösungen der aufgezeigten Art noch verbesserungsbedürftig sind. Die Anordnung von Blattfedern ist aufwendig und hinsichtlich der Führungsqualität nicht befriedigend. In die Seitenwände der Gehäuse federnde Laschen einzuschneiden und in diese Führungsvorsprünge einzuprägen, ist ebenfalls aufwendig, nur bei aus Blech bestehenden Gehäusen sinnvoll und letztendlich hinsichtlich der Führungsqualität nicht befriedigend. Besonders aufwendig und dennoch hinsichtlich der Führungsqualität wenig befriedigend ist die Maßnahme, zwischen Einsatz und Gehäuse Rollen vorzusehen. Auch die Befestigung und Anordnung von Gleitstücken der vorbekannten Art ist aufwendig und hinsichtlich der Führungsqualität unbefriedigend. Weniger aufwendig ist die Ausbildung und Anordnung der in DE-A-2 731 984 und DE-A-3 409 732 beschriebenen Führungsorgane, die aber hinsichtlich der Führungsqualität ebenfalls noch verbesserungsbedürftig sind.

Die bekannten Anordnungen (zum Beispiel aus DE-C-3 409 732, welche dem Oberbegriff von Anspruch 1 entspricht) haben im wesentlichen miteinander gemeinsam, daß die Führungselemente (Federn, Rollen, Gleitstücke) in Schieberichtung des Einsatzes jeweils hintereinander angeordnet sind, so daß der Einsatz eine federnde Abstützung in lediglich einer Ebene erfährt, was den Einsatz aber - wie die Praxis zeigt - keineswegs wackelfrei macht.

Der Erfindung liegt hiernach die Aufgabe zugrunde, einen Behälter, insbesondere Ascher für Fahrzeuge, der eingangs näher erwähnten Art hinsichtlich der Gleitführung des Einsatzes mit einfachen und kostengünstigen Mitteln zu verbessern, wobei insbesondere noch angestrebt wird, daß der Einsatz auch in Offenstellung einen völlig wackelfreien Sitz im Gehäuse erfährt.

Der Erfindung zufolge wird diese Aufgabe dadurch gelöst, daß die Führungsvorsprünge relativ zueinander in der Plattenebene als auch senkrecht hierzu federelastisch beweglich sind, daß die Führungsvorsprünge jeder Platte übereinander, d. h. quer zur Bewegungsachse des Einsatzes angeordnet sind, daß die Führungsvorsprünge mit sowohl vertikaler als auch horizontaler Vorspannung in die Führungsnuten des Einsatzes eingreifen und daß an jeder Seitenwand des Gehäuses mindestens zwei Führungsorgane mit Abstand nebeneinander befestigt sind.

Durch die erfindungsgemäßen Maßnahmen ergibt sich eine kostengünstige Gleitführung für den Einsatz, welche insbesondere auch eine exakte Führung sowohl in vertikaler als auch in horizontaler Richtung gewährleistet. Die federnde Gleiterführung mit Wirkweise in zwei Ebenen (horizontal und vertikal) bewirkt darüber hinaus einen stabilen, also wackelfreien Sitz in der Offenstellung des Einsatzes. Gegenüber herkömmlichen Führungselementen mit lediglich zwei Stützpunkten besitzt jedes erfindungsgemäß zur Anwendung gelangende Führungselement nunmehr die doppelte Anzahl von Stützpunkten, was wesentlich ist.

In bevorzugter Ausgestaltung der Erfindung ist vorgesehen, daß jede Platte einen Plattenmittenteil mit

2

nach hinten zurückspringender, sich an einer Seitenwand des Gehäuses abstützender Anlagefläche aufweist, daß sich an zwei einander abgewandten Seiten des Plattenmittenteils zwei gegenüber dem Plattenmittenteil dünnere Federarme mit jeweils etwa rechtwinklig nach vorne abgebogenen, Führungsvorsprünge bildende Federarm-Endstücke anschließen, daß sich im Übergangsbereich zwischen dem Plattenmittenteil und den vorderseitig bündig mit der Vorderseite des Plattenmittenteils abschließenden Federarmen jeweils eine nach hinten gerichtete, eine Hohlkehle bildende Federarmkrümmung befindet, die in einen parallel zur Plattenmittenteilebene verlaufenden Federarmabschnitt übergeht, daß jeder Federarm zumindest eine vorderseitige Versteifungsrippe aufweist, die sich von den eine Hohlkehle bildenden Federarmkrümmungen bis kurz vor dem freien Ende der Federarm-Endstücke erstreckt, und daß die freien Enden der Federarm-Endstücke abgerundet und nach außen wulstförmig verdickt sind. Solchermaßen ausgebildete Platten können einfach und kostengünstig als Kunststoff-Spritzgußteile hergestellt sein. Die Federarme sind insbesondere durch die jeweils eine Hohlkehle bildenden Federarmkrümmungen federelastisch ausgebildet.

Die im schubladenartigen Einsatz vorgesehenen Führungsnuten weisen, in Weiterbildung der Erfindung, jeweils eine im wesentlichen eben ausgebildete Bodenwandung und zwei sich daran rechtwinklig anschließende Seitenwandungen und damit eine besonders einfach herzustellende Ausbildung auf.

Um den Einsatz nach völliger Entnahme wieder leicht ins Gehäuse einführen zu können, ist jeweils eine Seitenwandung jeder Führungsnut länger als die jeweils gegenüberliegende ausgebildet. Dem gleichen Zweck dient die Maßnahme, daß die wulstförmige Verdickung der Federarm-Endstücke zu den Randkanten der Federarme hin abnimmt.

Ein Ausführungsbeispiel der Erfindung wird im folgenden anhand der Zeichnung näher erläutert. Es zeigen:

Fig. 1 einen als Fahrzeugascher ausgebildeten Behälter in Ansicht,

Fig. 2 einen Schnitt folgend der Linie II - II in Fig. 1,

Fig. 3 einen Schnitt folgend der Linie III - III in Fig. 1,

Fig. 4 einen Schnitt folgend der Linie IV IV in Fig. 3,

Fig. 5 eine Einzelheit der Erfindung.

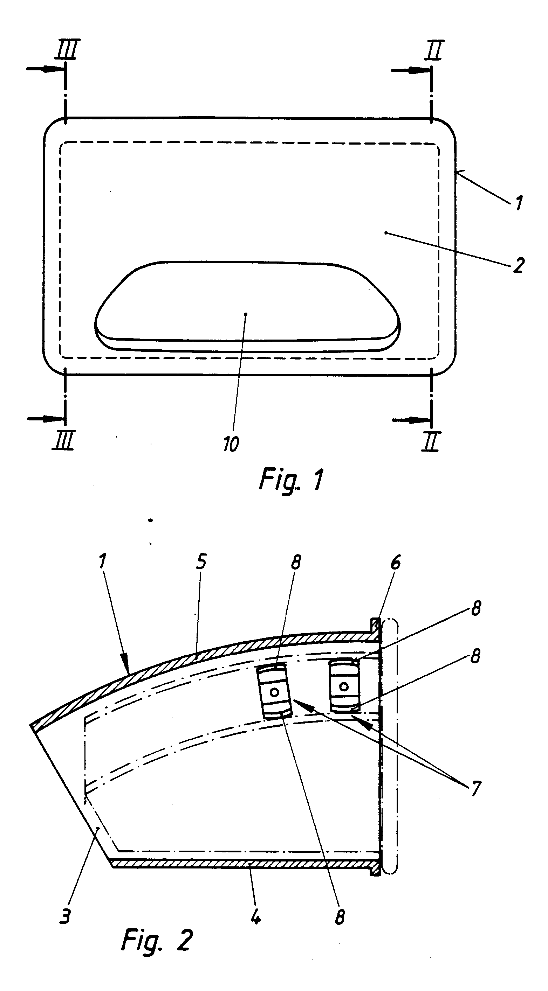

Die Fig. 1 bis 4 zeigen einen als Ascher für Fahrzeuge ausgebildeten Behälter, bestehend aus einem Gehäuse 1 und einem darin schubladenartig aufgenommenen Einsatz 2. Das Gehäuse 1 ist vorne und gegebenenfalls hinten offen und weist im übrigen zwei Seitenwände 3 (von denen in Fig. 2 lediglich die rechte zu sehen ist) eine Bodenwand 4 und eine Kopfwand 5 auf. Vorderseitig ist das Gehäuse 1, das zweckmäßigerweise aus einem Kunststoff-Spritzgußteil besteht, mit einem umlaufenden Flansch 6 versehen. An den Seitenwänden 3 des Gehäuses 1 sind jeweils zumindest zwei, weiter unten noch zu beschreibende Führungsorgane 7 mit Abstand nebeneinander befestigt, die jeweils zwei Führungsvorsprünge 8 aufweisen, die übereinander, d.h. quer zur Bewegungsachse des Einsatzes 2 angeordnet sind.

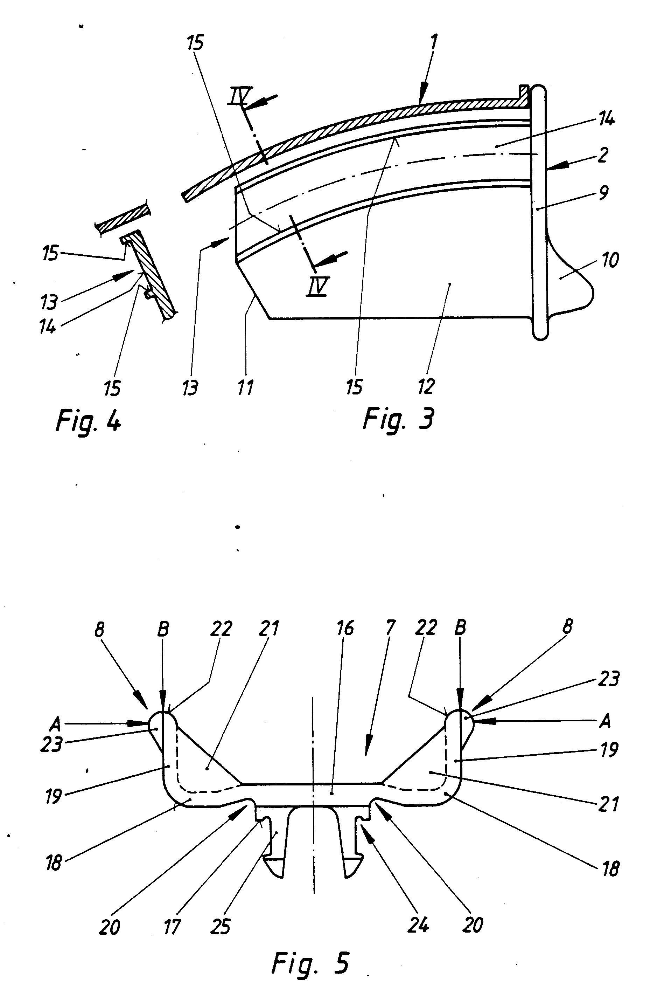

Der Einsatz 2, der in Fig. 2 lediglich strichpunktiert angedeutet ist, ist nur nach oben hin offen und weist vorderseitig eine Frontplatte 9, gegebenenfalls mit Handhabe 10, hinterseitig eine Rückwand 11 und an den Seiten zwei Seitenwände 12 auf, von denen in der Zeichnung (Fig. 3) nur eine zu sehen ist. Der Einsatz 2, der zweckmäßigerweise, ebenso wie das Gehäuse 1, als Kunststoff-Spritzgußteil ausgeführt ist, weist am oberen Randbereich der Seitenwände 12 jeweils eine angeformte Führungsnut 13 auf, die geradlinig oder auch bogenförmig verlaufend ausgebildet sein kann. Die Führungsnut 13 weist eine im wesentlichen ebene Bodenwandung 14 und zwei sich daran rechtwinklig anschließende Seitenwandungen 15 auf, von denen die obere vor der Rückwand 11 endet und die untere an der Rückwand 11 ausläuft.

In Fig. ist eines der Führungsorgane 7 in einer Seitenansicht näher dargestellt. Das Führungsorgan 7 ist als langliche Platte mit an den freien Längsenden angeordneten, nach außen gerichteten Führungsvorsprüngen 8 ausgebildet. Die Platte weist einen Plattenmittenteil 16 mit nach hinten zurückspringender, sich an einer Seitenwand 3 des Gehäuses 1 abstützender Anlagefläche 17 auf. An zwei einander abgewandten Seiten des Plattenmittenteils 16 schließen sich zwei gegenüber dem Plattenmittenteil 16 dünnere Federarme 18 mit jeweils etwa rechtwinklig nach vorne (in der Zeichnung nach oben) abgebogenen Federarm-Endstücken 19 an. Im Übergangsbereich zwischen dem Plattenmittenteil 16 und den vorderseitig bündig mit der Vorderseite des Plattenmittenteils 16 abschließenden Federarmen 18, befindet sich jeweils eine nach hinten gerichtete, eine Hohlkehle 20 bildende Federarmkrümmung, die in einen parallel zur Plattenmittenteilebene verlaufenden Federarmabschnitt übergeht, an dem sich jeweils ein Federarm-Endstück über einen 90° - Bogen anschließt. Jeder Federarm 18 weist zumindest eine vorderseitige Versteifungsrippe 21 auf, die sich von den eine Hohlkehle 20 bildenden Federarmkrümmungen bis kurz vor dem freien Ende der Federarm-Endstücke 19 erstreckt. Die freien Enden der Federarm-Endstücke sind abgerundet (Abrundungen 22) und nach außen wulstförmig (Wulst 23) verdickt. Die wulstförmigen Verdickungen nehmen in nicht näher dargestellter Weise zu den Randkanten der Federarm 18 hin ab.

Aufgrund der dargestellten und vorstehend näher erläuterten Gestaltung des Führungsorganes 7, vermögen die Führungsvorsprünge 8 sowohl parallel zur Ebene des Plattenmittenteils 16 (Pfeilrichtung A) als auch senkrecht hierzu (Pfeilrichtung B) zu federn, wobei sich das Federungsvermögen im Bereich der Hohlkehlen 20 befindet. Damit wird ermöglicht, daß die Führungsvorsprünge 8 mit sowohl vertikaler als auch horizontaler Vorspannung in die Führungsnuten 13 des Einsatzes 2 eingreifen und Fertigungstoleranzen ausgleichen.

Fig. 5 zeigt weiterhin, daß sich an die, sich in einer Seitenwand 3 des Gehäuses abstützende Anlagefläche 17 des Plattenmittenteils 16 ein unrunder, z.B. viereckiger Zentrieransatz 24 anschließt, der in eine entsprechend unrund gestaltete Öffnung (nicht gezeigt) in der Gehäuseseitenwand 3 eingreift. Im dargestellten Ausführungsbeispiel ist der Zentrieransatz 24 als Befestigungsklips 25 ausgebildet. Es ist noch zu erwähnen, daß die Führungsorgane 7 vorzugsweise als einstückige Kunststoff-Spritzgußteile ausgebildet sind.

Es liegt natürlich im Rahmen der Erfindung, die Führungsorgane 7 am Einsatz 2 und die Führungsnuten 13 am Gehäuse 1 anzuordnen.


## Patentansprüche

1. Behälter, insbesondere Ascher für Fahrzeuge, bestehend aus einem Gehäuse (1) und einem schubladenartigen Einsatz (2), der über Führungsorgane (7) gleitbeweglich in dem Gehäuse (1) geführt ist, wobei die Führungsorgane (7) an den Seitenwänden (3) des Gehäuses (1) befestigt und jeweils als längliche, in sich federnde Platten mit an den freien Längsenden angeordneten, nach außen gerichteten Führungsvorsprüngen (8) ausgebildet sind, die mit entsprechenden Führungsnuten (14) am Einsatz (2) mit Vorspannung zusammenwirken, wobei die Führungsvorsprünge (8) einstückig und materialeinheitlich mit der jeweils zugehörigen Platte verbunden sind, dadurch gekennzeichnet, daß die Führungsvorsprünge (8) relativ zueinander in der Plattenebene als auch senkrecht hierzu federelastisch beweglich sind, daß die Führungsvorsprünge (8) jeder Platte übereinander, d. h. quer zur Bewegungsachse des Einsatzes (2) angeordnet sind, daß die Führungsvorsprünge (8) mit sowohl vertikaler als auch horizontaler Vorspannung in die Führungsnuten (13) des Einsatzes (2) eingreifen und daß an jeder Seitenwand (3) des Gehäuses (1) mindestens zwei Führungsorgane (7) mit Abstand nebeneinander befestigt sind.

2. Behälter nach Anspruch 1, dadurch gekennzeichnet, daß jede Platte einen Plattenmittenteil (16) mit nach hinten zurückspringender, sich an einer Seitenwand (3) des Gehäuses (1) abstützender Anlagefläche (17) aufweist, daß sich an zwei einander abgewandten Seiten des Plattenmittenteils (16) zwei gegenüber dem Plattenmittenteil dünnere Federarme (18) mit jeweils etwa rechtwinklig nach vorne abgebogenen Führungsvorsprünge (8) bildende Federarm-Endstücke (19) anschließen, daß sich im Übergangsbereich zwischen dem Plattenmittenteil (16) und den vorderseitig bündig mit der Vorderseite des Plattenmittenteils (16) abschließenden Federarmen (18) jeweils eine nach hinten gerichtete, eine Hohlkehle (20) bildende Federarmkrümmung befindet, die in einen parallel zur Plattenmittenteilebene verlaufenden Federarmabschnitt übergeht, daß jeder Federarm (18) zumindest eine vorderseitige Versteifungsrippe (21) aufweist, die sich von den eine Hohlkehle (20) bildenden Federarmkrümmungen bis kurz vor dem freien Ende der Federarm-Endstücke (19) erstreckt, und daß die freien Enden der Federarm-Endstücke (19) abgerundet und nach außen wulstförmig verdickt sind.

3. Behälter nach Anspruch 2, dadurch gekennzeichnet, daß sich an die, sich an einer Seitenwand (3) des Gehäuses (1) abstützende Anlagefläche (17) des Plattenmittenteils (16) ein unrunder, z. B. viereckiger Zentrieransatz (24) anschließt, der in eine entsprechend unrund gestaltete Öffnung in der Seitenwand (3) eigreift.

4. Behälter nach Anspruch 3, dadurch gekennzeichnet, daß der Zentrieransatz (24) als Befestigungsklips (25) ausgebildet ist.

5. Behälter nach einem oder mehreren der Ansprüche 1 bis 4, dadurch gekennzeichnet, daß die Führungsorgane (7) als Kunststoff-Spritzgußteile ausgebildet sind.

6. Behälter nach einem oder mehreren der Ansprüche 1 bis 5, dadurch gekennzeichnet, daß die im schubladenartigen Einsatz (2) vorgesehenen Führungsnuten (13) jeweils eine im wesentlichen eben ausgebildete Bodenwandung (14) und zwei sich daran rechtwinklig anschließende Seitenwandungen (15) aufweisen.

7. Behälter nach Anspruch 6, dadurch gekennzeichnet, daß jeweils eine Seitenwandung (15) jeder Führungsnut (14) länger als die gegenüberliegende ausgebildet ist.

8. Behälter nach einem oder mehreren der Asprüche 3 bis 7, dadurch gekennzeichnet, daß die wulstförmige Verdickung (23) der Federarm-Endstücke (19) zu den Randkanten der Federarme (18) hin abnimmt.


## Claims

1. A container, especially an ash-tray for vehicles, comprising a housing (1) and a drawer-like insert (2), which is guided via guide members (7) so as to be movable slidably in the housing (1), in which the guide members (7) are attached to the side walls (3) of the housing (1) and in each case are constructed as elongate springy plates with outwardly directed guide projections (8) arranged at the free longitudinal ends, which guide projections (8) cooperate with corresponding guide grooves (14) on the insert (2) with pre-stressing, in which the guide projections (8) are connected in one piece and are of a uniform material with the respectively associated plate, characterised in that the guide projections (8) are movable relative to each other in the plate plane and also vertically thereto in an elastic manner, that the guide projections (8) of each plate are arranged one over the other, i.e. transversely to the axis of movement of the insert (2), that the guide projections (8) engage with both vertical and also horizontal pre-stressing into the guide grooves (13) of the insert (2) and that on each side wall (3) of the housing (1) at least two guide members (7) are attached side by side, spaced apart from each other.

2. A container according to Claim 1, characterised in that each plate has a central plate part (16) with a rearwardly receding contact surface (17) resting on a side wall (3) of the housing (1), that on two sides of the central plate part (16) facing away from each other two spring arms (18), which are thinner compared with the central plate part, are connected to spring arm end pieces (19) in each case forming guide projections which are bent approximately at right angles towards the front, that in the transition region between the central plate part (16) and the spring arms (18), ending on the front side flush with the front side of the central plate part (16) in each case there is situated a rearwardly directed spring arm curvature forming a channel (20), which curvature passes on into a spring arm section running parallel to the plane of the central plate part, that each spring arm (18) has at least one reinforcement rib (21) on the front side, which extends from the spring arm curvatures forming a channel (20) to shortly before the free end of the spring arm end pieces (19), and that the free ends of the spring arm end pieces (19) are rounded off and are enlarged towards the exterior in a bead shape.

3. A container according to Claim 2, characterised in that connected to the contact surface (17) of the central plate part (16), resting on a side wall (3) of the housing (1), is a centering lug (24) which is not round, e.g. is square, which engages into an opening in the side wall (3) which is likewise constructed accordingly in a non-round shape.

4. A container according to Claim 3, characterised in that the centering lug (24) is constructed as an attachment clip (25).

5. A container according to one or more of Claims 1 to 4, characterised in that the guide members (7) are constructed as injected die castings of plastics.

6. A container according to one or more of Claims 1 to 5, characterised in that the guide grooves (13), provided in the drawer-like insert (2) in each case have a base wall (14) which is of substantially flat construction, and two side walls (15) adjoining thereon at right angles.

7. A container according to Claim 6, characterised in that in each case one side wall (15) of each guide groove (15) is constructed so as to be longer than the opposite one.

8. A container according to one or more of Claims 3 to 7, characterised in that the bead-shaped enlargement (23) of the spring arm end pieces (19) decreases towards the marginal edges of the spring arms (18).


**Revendications**

1. Récipient, notamment cendrier pour véhicule automobile, constitué d'un boîtier (1) et d'un accessoire (2) en forme de tiroir qui est guidé coulissant dans le boîtier (1), par l'intermédiaire d'organes de guidage (7), les organes de guidage (7) étant fixés sur les parois latérales (3) du boîtier (1) et conçus comme des plaques allongées, élastiques, avec des saillies de guidage (8) dirigées vers l'extérieur, placées sur les extrémités longitudinales libres, qui coopèrent sous précontrainte avec des rainures de guidage (14) correspondantes de l'accessoire (2), les saillies de guidage (8) étant assemblées d'une seule pièce avec la plaque correspondante et réalisées dans la même matière que celle-ci, caractérisé en ce que les saillies de guidage (8) sont mobiles élastiquement l'une par rapport à l'autre dans le plan de la plaque ainsi que perpendiculairement à celle-ci, en ce que les saillies de guidage (8) de chaque plaque sont disposées l'une au-dessus de l'autre, c'est-à-dire transversalement à l'axe de déplacement de l'accessoire (2), en ce que les saillies de guidage (8) s'engagent dans les rainures de guidage (13) de l'accessoire (2), avec précontrainte verticale ainsi qu'horizontale et en ce que deux organes de guidage (7) au moins sont fixés, espacés l'un de l'autre, sur chaque paroi latérale (3) du boîtier (1).

2. Récipient selon la revendication 1, caractérisé en ce que chaque plaque comporte une partie centrale de plaque (16) avec surface d'application (17), en retrait vers l'arrière, prenant appui contre une paroi latérale (3) du boîtier (1), en ce que, sur deux côtés opposés l'un à l'autre de la partie centrale de plaque (16), se raccordent deux bras de ressort (18) plus minces que la partie centrale de plaque avec chacun des embouts de bras de ressort (19), repliés à peu près à angle droit vers l'avant, formant des saillies de guidage (8), en ce que, dans la zone de transition entre la partie centrale de plaque (16) et les bras de ressort (18) alignés à l'avant avec la face avant de la partie centrale de plaque (16), il se trouve une courbure de bras de ressort, dirigée vers l'arrière, formant une gorge creuse (20), qui se prolonge par une portion de bras de ressort parallèle au plan de la partie centrale de plaque, en ce que chaque bras de ressort (18) présente au moins une nervure de renfort (21) avant qui s'étend depuis les courbures de bras de ressort formant une gorge creuse (20), jusque juste avant l'extrémité libre des embouts de bras de ressort (19) et en ce que les extrémités libres des embouts de bras de ressort (19) sont arrondies et épaissies en bourrelet vers l'extérieur.

3. Récipient selon la revendication 2, caractérisé en ce qu'un talon de centrage (24) non rond, par exemple rectangulaire, qui s'engage dans une ouverture de forme non ronde correspondante de la paroi latérale (3), se raccorde à une surface d'application (17) de la partie centrale de plaque (16), prenant appui contre une paroi latérale (3) du boîtier (1).

4. Récipient selon la revendication 3, caractérisé en ce que le talon de centrage (24) est un clips de fixation (25).

5. Récipient selon une ou plusieurs des revendications 1 à 4, caractérisé en ce que les organes de guidage (7) sont des pièces en matière plastique moulées par injection.

6. Récipient selon une ou plusieurs des revendications 1 à 5, caractérisé en ce que les rainures de guidage (13), prévues dans l'accessoire (2) en forme de tiroir, présentent chacune une paroi de fond (14) à peu près plane et deux parois latérales (15) se raccordant à la première à peu près à angle droit.

7. Récipient selon la revendication 6, caractérisé en ce qu'une paroi latérale (15) de chaque rainure de guidage (14) est plus longue que la paroi opposée.

8. Récipient selon une ou plusieurs des revendications 3 à 7, caractérisé en ce que la surépaisseur (23) en forme de bourrelet des embouts de bras de ressort (19 diminue vers les arêtes de bordure des bras de ressort (18).

III             II

1

2

III             II

10

Fig. 1

1    5    8    6

8

8

7

3        4    8

Fig. 2

Fig. 4

Fig. 3

Fig. 5